# EUROPEAN PATENT APPLICATION

(11) **EP 4 679 275 A1**
(43) Date of publication of application: **14.01.2026**
(21) Application number: 23926472.4
(22) Date of filing: 26.12.2023
(51) Int. Cl.: G06F 11/36, G06F 8/20

(54) **EVALUATION ASSISTANCE PROGRAM, EVALUATION ASSISTANCE METHOD, AND INFORMATION PROCESSING DEVICE**

(30) Priority: 03.03.2023 JP 2023032504
(71) Applicant: FUJITSU LIMITED, Kawasaki-shi, Kanagawa 211-8588 (JP)
(72) Inventor: OHASHI, Kyoko, Kawasaki-shi, Kanagawa 211-8588 (JP); NITTA, Izumi, Kawasaki-shi, Kanagawa 211-8588 (JP); INAKOSHI, Hiroya, Kawasaki-shi, Kanagawa 211-8588 (JP)
(74) Representative: Hoffmann Eitle
(86) International application number: PCT/JP2023/046574
(87) International publication number: WO 2024/185268

(57) **Abstract**

It makes it possible to easily grasp the contents of check items related to the operation of an AI system.

An information processing apparatus 10 identifies a first path 6 on the basis of relationship information 11a indicative of data transfer relationships between two of functions 2a and 2b in an AI system 1, management target data 3a, 3b, 3c, and 3d, and relevant persons 4a, 4b, and 4c. The first path 6 indicates a route which follows a data transfer relationship from a start point to an end point with the start point set to one of the functions 2a and 2b, the management target data 3a, 3b, 3c, and 3d, and the relevant persons 4a, 4b, and 4c and the end point set to another one. The information processing apparatus 10 selects a first check item related to a first data transfer relationship 7 on the route indicated by the first path 6 from among a plurality of check items associated with any of the data transfer relationships indicated by the relationship information 11a. Furthermore, the information processing apparatus 10 displays information on the first check item.

## Description

### Technical Field

The embodiments discussed herein relate to an evaluation support program, an evaluation support method, and an information processing apparatus.

### Background Art

In an artificial intelligence (AI) system, ethical risk assessment may be performed.

For example, the use of AI systems for various industries and tasks may cause ethical problems. If such problems occur, not only a company or organization that provides an AI system but also a user of the AI system and the society ahead thereof are greatly affected. Therefore, approaches have been made to recognize and cope with ethical risks in implementing AI in society. Such an approach is an ethical risk assessment.

An AI system has a plurality of stakeholders, and a social situation surrounding the stakeholders changes. A stakeholder is a person or organization involved in the system. Because an environment surrounding the stakeholders changes, it may be that to detect what kind of ethical problem is caused by use of the AI system is not easy. Accordingly, existing ethical risks may be analyzed by applying to the AI system and its stakeholders based on a checklist of ethical risks indicated by principles and guidelines for AI ethics.

Examples of principles and guidelines related to AI ethics include "European High-Level Expert Group on AI (AI HLEG) 'Ethics Guidelines for Trustworthy AI'", "Ministry of Internal Affairs and Communications AI Utilization Guidelines", "Social Principles of Human-Centric AI", and "OECD 'Recommendation of the Council on Artificial Intelligence'".

In addition, a "risk chain model (RCModel)" has been proposed as a model in which an AI service provider contributes to consideration of risk control related to his/her AI service while considering the existence of various forms of AI service provision.

In the risk chain model, risk components are organized and structured by the following (1) to (3):
(1) Technical Components of an AI System
(2) Components related to the behavior rule of a service provider (including communication with a user)
(3) Components related to a user's understanding, behavior, and use environment

In addition, in the risk chain model, the identification of a risk scenario, the specification of a component serving as a risk factor, the visualization of a risk chain, and the examination of risk control are performed. In the visualization of a risk chain and the examination of risk control, an AI service provider visualizes relationships (risk chain) among components related to the risk scenario, thereby enabling examination of a stepwise risk reduction.

### Citation List

### Non-Patent Literature

NPTL1: Takashi Matsumoto and Arisa Ema, "Proposal of Risk Chain Model for Reducing Risk of AI Services", June 4, 2020, Internet <URL: ifi.u-tokyo.ac.jp/wp/wp-content/uploads/2020/06/policy_recommendation_tg_20200604. pdf>

### Summary of Invention

### Technical Problem

A large number of check items are included in a checklist regarding an ethical risk at the time of the operation of an AI system, but relationships among the check items are not clear. In addition, because the check list is detailed from an ethical viewpoint, there may be a plurality of check items having similar contents detailed from the same viewpoint.

However, conventional ethical risk assessments only present individual risks indicated by a large number of checkpoints. Therefore, in work in which a relevant person understands a risk extracted by using a checklist and proceeds with examination of a countermeasure, the relevant person examines similar risks many times, and a temporal and psychological burden is large. Therefore, it is needed to reduce a workload taken to understand an ethical risk of an AI system.

Although the problems related to understanding and countermeasures against ethical risks of an AI system have been described, similar problems arise when other risks related to the operation of the AI system (e.g., the risk of unauthorized use of personal information) or the contents of check items other than risks are understood.

### Solution to Problem

According to an aspect of the present disclosure, there is provided an evaluation support program causing a computer to execute the following process.

The computer identifies, on the basis of relationship information indicative of a data transfer relationship between two of a function in an AI system, management target data managed by the AI system, and a relevant person involved in an operation of the AI system, a first path indicative of a route following the data transfer relationship from a start point to an end point, with the start point set to one of the function, the management target data, and the relevant person and the end point set to another one thereof. The computer selects a first check item related to a first data transfer relationship on the route indicated by the first path from among a plurality of check items associated with any of the data transfer relationships indicated by the relationship information. Furthermore, the computer displays information on the first check item.

### Advantageous Effects of Invention

According to one aspect, the contents of check items regarding the operation of an AI system are easily grasped.

### Brief Description of Drawings

[FIG. 1] FIG. 1 illustrates an example of an evaluation support method according to a first embodiment.
[FIG. 2] FIG. 2 illustrates an example of an ethical risk assessment of an AI system.
[FIG. 3] FIG. 3 illustrates an example of hardware of a computer used for performing AI system development and a risk analysis.
[FIG. 4] FIG. 4 is a block diagram illustrative of an example of the functions of a computer for AI system development and risk analysis.
[FIG. 5] FIG. 5 illustrates an example of an important interaction extraction rule.
[FIG. 6] FIG. 6 illustrates an example of interactions performed at the time of the operation of an AI system.
[FIG. 7] FIG. 7 illustrates an example of an AI ethics checklist.
[FIG. 8] FIG. 8 illustrates an example of an interaction set.
[FIG. 9] FIG. 9 illustrates an example of an important check item extraction process.
[FIG. 10] FIG. 10 illustrates an example of a graph structure of an interaction indicated by graph structure data.
[FIG. 11] FIG. 11 illustrates an example of an important AI ethic checklist.
[FIG. 12] FIG. 12 illustrates an example of an analysis diagram including all risks.
[FIG. 13] FIG. 13 illustrates an example of a related risk visualization process.
[FIG. 14] FIG. 14 is a flowchart illustrative of an example of a procedure for a related risk analysis process.
[FIG. 15] FIG. 15 illustrates a first example of a path extracted according to path information.
[FIG. 16] FIG. 16 illustrates a first example of a displayed analysis diagram.
[FIG. 17] FIG. 17 illustrates a second example of a path extracted according to path information.
[FIG. 18] FIG. 18 illustrates a second example of a displayed analysis diagram.
[FIG. 19] FIG. 19 illustrates a third example of a path extracted according to path information.
[FIG. 20] FIG. 20 illustrates a third example of a displayed analysis diagram.

### Description of Embodiments

Embodiments will now be described with reference to the drawings. These embodiments may be combined unless they have contradictory features.

### [First Embodiment]

A first embodiment is an evaluation support method for supporting an evaluation of check items related to the operation of an AI system by extracting and displaying check items having a predetermined relationship from a large number of check items related to the operation of the AI system.

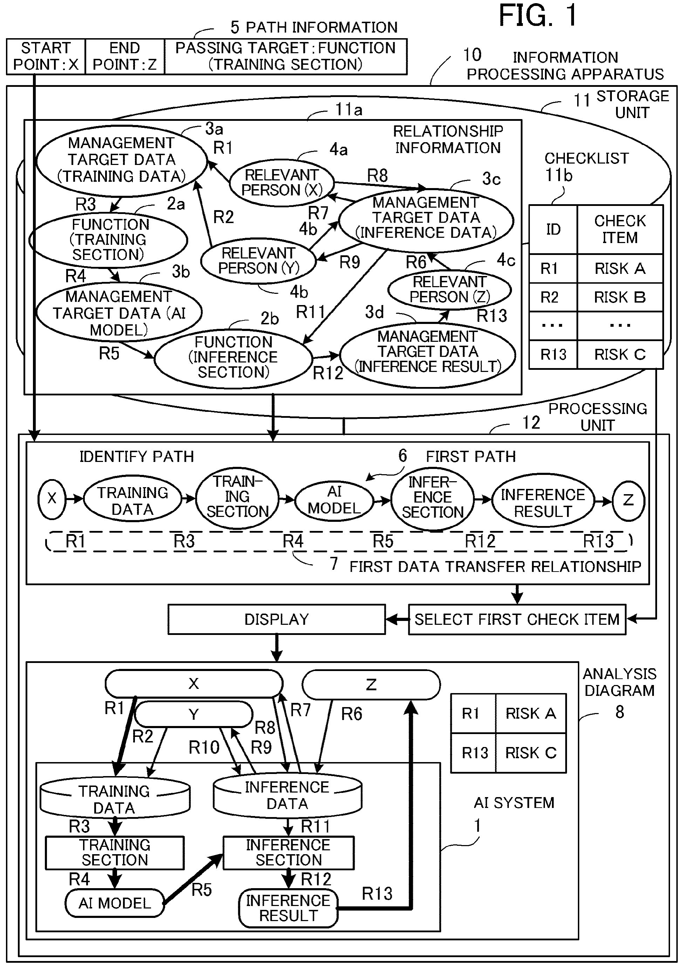

FIG. 1 illustrates an example of an evaluation support method according to a first embodiment. FIG. 1 illustrates an information processing apparatus 10 that implements the evaluation support method. The information processing apparatus 10 implements the evaluation support method by executing, for example, an evaluation support program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores relationship information 11a and a checklist 11b. The relationship information 11a indicates a data transfer relationship between two of functions 2a and 2b in an AI system 1, management target data 3a, 3b, 3c, and 3d managed by the AI system 1, and relevant persons 4a, 4b, and 4c involved in the operation of the AI system 1.

The functions 2a and 2b are, for example, a training section that trains (or learns) an AI model and an inference section that performs inference by the use of the AI model, respectively. The management target data 3a, 3b, 3c, and 3d are, for example, training data for training, a trained AI model, inference data for inference, and an inference result.

The relevant persons 4a, 4b, and 4c are, for example, sources of providing data to the AI system 1 or destinations of using data of the AI system 1. In the example of FIG. 1, the relevant persons 4a and 4b are, for example, persons (X and Y) who provide the training data or the inference data. Furthermore, the relevant person 4c is a person (Z) who provides the inference data and who uses the inference result.

The checklist 11b is a list of check items indicative of confirmation items such as a risk which occurs in a data transfer relationship. In the checklist 11b, for example, in association with IDs (R1, R2, ..., and R13) assigned to respective data transfer relationships, the contents of check items related to the data transfer relationships indicated by the IDs are registered. The contents of a check item are, for example, an ethical risk which may occur in a corresponding data transfer relationship.

The processing unit 12 extracts check items having a predetermined relationship and displays the extracted check items by the use of the relationship information 11a and the checklist 11b stored in the storage unit 11. For example, the processing unit 12 identifies a first path 6 on the basis of the relationship information 11a. The first path 6 indicates a path that follows a data transfer relationship from a start point to an end point when one of the functions 2a and 2b, the management target data 3a, 3b, 3c, and 3d, and the relevant persons 4a, 4b, and 4c is set as the start point and another is set as the end point.

The start point and the end point are specified by, for example, path information 5. For example, the path information 5 is inputted by an analyst who analyzes a risk or the like that occurs at the time of the operation of the AI system 1. In the path information 5, a passing target may also be designated. In this case, in the path information 5, at least one of the functions 2a and 2b, the management target data 3a, 3b, 3c, and 3d, or the relevant persons 4a, 4b, and 4c is designated as a passing target in addition to the designation of the start point and the end point. If a passing target is designated, then the processing unit 12 identifies, as the first path 6, a path that follows a data transfer relationship from the start point to the end point via the passing target.

In the example of FIG. 1, in the path information 5, the relevant person 4a (X) is designated as the start point and the relevant person 4c (Z) is designated as the end point. Furthermore, the function 2a (training section) is designated as the passing target. As a result, the first path 6 of "X → training data → training section → AI model → inference section → inference result → Z" is identified.

The processing unit 12 selects a first check item related to a first data transfer relationships 7 on the path indicated by the first path 6 from among a plurality of check items associated with any of data transfer relationships indicated by the relationship information 11a. In the example of FIG. 1, the first data transfer relationships 7 on the path indicated by the first path 6 are data transfer relationships corresponding to IDs "R1, R3, R4, R5, R12, and R13" respectively. Furthermore, in the checklist 11b, "risk A" is registered in association with the data transfer relationship of the ID "R1" and "risk C" is registered in association with the data transfer relationship of the ID "R13". Therefore, the processing unit 12 selects "risk A" corresponding to the data transfer relationship of the ID "R1" and "risk C" corresponding to the data transfer relationship of the ID "R13" as first check items.

In addition, the processing unit 12 displays information regarding the selected first check items on, for example, a monitor. In the example of FIG. 1, the processing unit 12 generates an analysis diagram 8 including information regarding the selected first check items and displays the analysis diagram 8 on the monitor. In the analysis diagram 8, for example, a data transfer relationship between two of the functions 2a and 2b, the management target data 3a, 3b, 3c, and 3d, and the relevant persons 4a, 4b, and 4c indicated in the relationship information 11a is represented by a schematic diagram. An ID is assigned to the data transfer relationship in the diagram. Furthermore, in the analysis diagram 8, the selected first check items are displayed in association with the corresponding data transfer relationship.

The information regarding the check items related to the first path 6 which follows the data transfer relationship from the start point to the end point is collectively displayed in this way. The check items related to the first path 6 are check items having a certain dependency relationship based on the data transfer relationship, and it is possible to efficiently plan a countermeasure or the like by collectively examining the check items.

In addition, because it is possible to designate a passing target in the path information 5, if there are a plurality of paths from the start point to the end point, it is possible to designate one of the plurality of paths as the first path 6. As a result, an increase in the number of check items displayed at the same time is prevented and the efficiency of the collective confirmation work for the related check items is improved.

Furthermore, for example, by displaying risks from an ethical viewpoint as check items, it is possible to properly determine a risk of an ethical error of the AI system 1 or a risk of an operator using the AI system 1 in an ethically erroneous way in the operation of the AI system 1.

In addition, a plurality of check items registered in advance in the checklist 11b may be classified into a plurality of groups. For example, a plurality of check items are classified according to a difference in ethical viewpoint that entails risk. In this case, the processing unit 12 may display check items by groups.

For example, the processing unit 12 selects a second check item which belongs to a first group among a plurality of first check items on the basis of classification information indicative of which of a plurality of groups each of a plurality of check items belongs to. Furthermore, in the process of displaying information regarding the plurality of first check items, the processing unit 12 displays information regarding the second check item selected from among the plurality of first check items. As a result, for example, it is possible to collectively confirm ethical risks from the same viewpoint.

### [Second Embodiment]

A second embodiment is a computer that supports an analysis of an ethical risk of an AI system in the development stage of the AI system. For example, the computer lists AI ethics check items of risks that the AI system may have. For example, a developer examines countermeasures in accordance with the contents of the listed risks and performs a risk assessment (risk evaluation) regarding the use of the AI system.

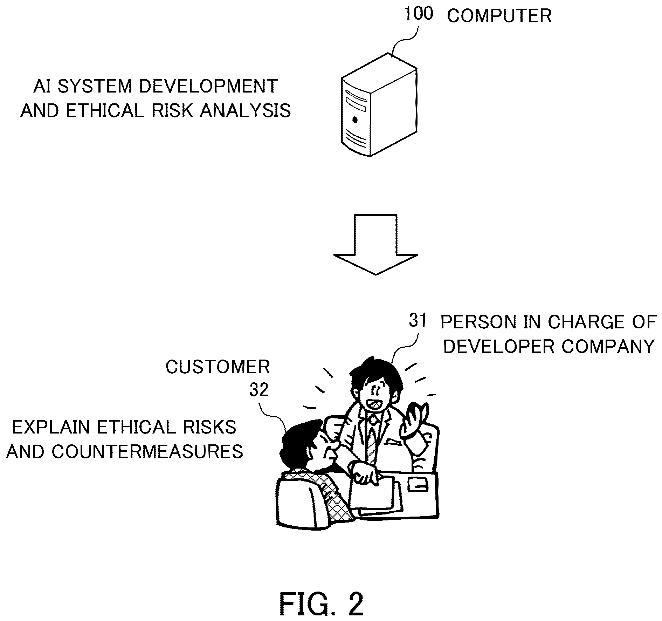

FIG. 2 illustrates an example of an ethical risk assessment of an AI system. A company that develops an AI system performs AI system development and an ethical risk analysis by the use of a computer 100. The computer 100 displays, for example, a list of ethical risks of the AI system as the result of the ethical risk analysis. A person 31 in charge of the developer company confirms all risks that may exist based on the analysis result, and plans countermeasures against the risks in advance. Furthermore, when the person 31 in charge of the developer company recommends the introduction of the AI system to a customer 32, the person 31 in charge of the developer company explains the ethical risks of the AI system and possible countermeasures against the risks. This prevents the customer 32 from taking an ethically problematic action by using the AI system.

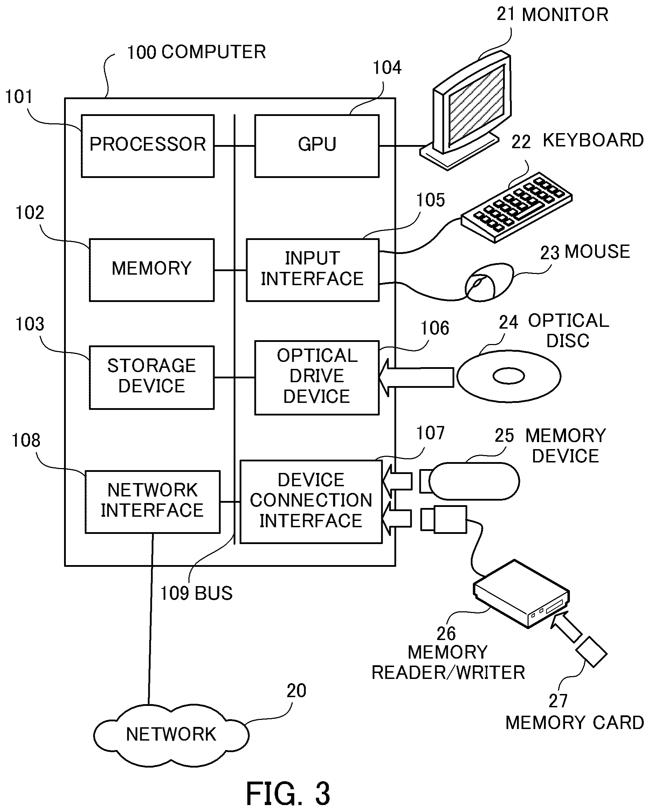

FIG. 3 illustrates an example of hardware of a computer used for performing AI system development and a risk analysis. The entire computer 100 is controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least part of functions realized by the processor 101 executing a program may be realized by an electronic circuit such as an application specific integrated circuit (ASIC) or a programmable logic device (PLD).

The memory 102 is used as a main storage device of the computer 100. The memory 102 temporarily stores at least part of an operating system (OS) program and application programs to be executed by the processor 101. Furthermore, the memory 102 also stores various pieces of data used for processing by the processor 101. As the memory 102, for example, a volatile semiconductor storage device, such as a random access memory (RAM), is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes data to and reads data from a built-in record medium. The storage device 103 is used as an auxiliary storage device of the computer 100. The storage device 103 stores the OS program, the application programs, and various pieces of data. As the storage device 103, for example, a hard disk drive (HDD) or a solid state drive (SSD) may be used.

The GPU 104 is an arithmetic unit that performs image processing. The GPU 104 is an example of a graphic controller. A monitor 21 is connected to the GPU 104. The GPU 104 displays an image on a screen of the monitor 21 in accordance with an instruction from the processor 101. The monitor 21 is a display device using organic electro luminescence (EL), a liquid crystal display device, or the like.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of the other pointing devices include a touch panel, a tablet, a touch pad, and a track ball.

The optical drive device 106 reads data recorded on an optical disc 24 or writes data to the optical disc 24 by the use of a laser beam or the like. The optical disc 24 is a portable record medium on which data is recorded so as to be readable by the reflection of light. The optical disc 24 may be a digital versatile disc (DVD), a DVD-RAM, a compact disc read only memory (CD-ROM), a CD-Recordable (CD-R)/CD-rewritable (CD-RW), or the like.

The device connection interface 107 is a communication interface for connecting peripheral devices to the computer 100. For example, a memory device 25 and a memory reader/writer 26 may be connected to the device connection interface 107. The memory device 25 is a record medium having the function of communicating with the device connection interface 107. The memory reader/writer 26 is a device that writes data to a memory card 27 or reads data from the memory card 27. The memory card 27 is a card-type record medium. The network interface 108 is connected to a network 20. The network interface 108 transmits data to and receives data from other computers or communication devices via the network 20. The network interface 108 is a wired communication interface connected to a wired communication device, such as a switch or a router, via a cable. Furthermore, the network interface 108 may be a wireless communication interface communicatively connected to a wireless communication device, such as a base station or an access point, by radio waves.

The computer 100 realizes the processing functions of the second embodiment by the above hardware. The information processing apparatus 10 described in the first embodiment is also realized by hardware similar to that of the computer 100 illustrated in FIG. 3.

The computer 100 realizes the processing functions of the second embodiment by executing, for example, a program recorded in a computer-readable record medium. The program which describes processing contents to be executed by the computer 100 may be recorded in various record media. For example, the program to be executed by the computer 100 may be stored in the storage device 103. The processor 101 loads at least part of the program in the storage device 103 into the memory 102 and executes the program. Furthermore, the program to be executed by the computer 100 may be recorded in a portable record medium such as the optical disc 24, the memory device 25, or the memory card 27. After the program stored in the portable record medium is installed in the storage device 103, for example, under the control of the processor 101, the program becomes executable. Alternatively, the processor 101 may read the program directly from the portable record medium and execute the program.

A company that develops an AI system uses the computer 100 to develop the AI system and analyze an ethical risk of the AI system. For example, the computer 100 displays risks of the AI system. At this time, if the number of risks to be displayed is too large, it is difficult to examine countermeasures against all risks. Therefore, the computer 100 preferentially displays, for example, important risks.

Even if risks are prioritized, about several tens of AI ethic check items may remain. At this time, if relationships among the risks are not clear, then a plurality of related risks a collective examination of which is efficient are individually examined, and risk examination work by an analyst becomes inefficient. In addition, if a checklist in which an ethical viewpoint is detailed is displayed, then a plurality of AI ethic check items detailed from the same viewpoint tend to have similar contents. If the analyst knows that there are AI ethic check items based on the same viewpoint, then examination work becomes efficient in this way.

When a large number of AI ethic check items are displayed, for example, the analyst may confirm the contents of the AI ethic check items and group related AI ethic check items. However, grouping work depends on the skill of the analyst and is not possible for anyone. Therefore, the computer 100 groups related AI ethic check items an ethical risk, and displays AI ethic check items related to an ethical risk by groups. As a result, it is possible to efficiently perform confirmation of risks and examination of countermeasures.

The computer 100 uses a checklist in which risks of the AI system to be examined are listed for each interaction for extracting ethical risks of the AI system. An interaction is data transfer (provision or use of data) using the AI system by a component or a stakeholder of the AI system.

A component of the AI system is a software module used for realizing the AI system. One or more interactions represent a relationship between a component and a stakeholder of the AI system. A stakeholder is a person or an organization involved in the operation of the AI system.

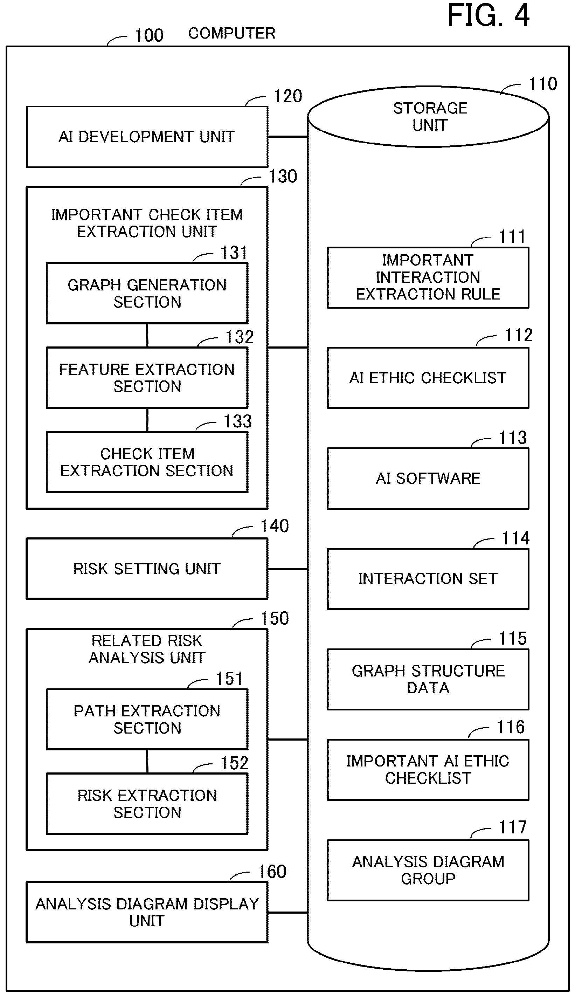

FIG. 4 is a block diagram illustrative of an example of the functions of a computer for AI system development and risk analysis. The computer 100 includes a storage unit 110, an AI development unit 120, an important check item extraction unit 130, a risk setting unit 140, a related risk analysis unit 150, and an analysis diagram display unit 160.

The storage unit 110 stores an important interaction extraction rule 111, an AI ethic checklist 112, AI software 113, an interaction set 114, graph structure data 115, an important AI ethic checklist 116, and an analysis diagram group 117.

The important interaction extraction rule 111 and the AI ethic checklist 112 are data prepared in advance for a risk analysis of the AI system. The important interaction extraction rule 111 is a rule for extracting an important interaction in the operation of the AI system. The AI ethic checklist 112 is a list of ethical risks assumed for an interaction having each feature.

The AI software 113 and the interaction set 114 are data obtained as a result of the development of the AI system using the AI development unit 120. The AI software 113 is software for causing a computer of an introduction destination to function as an AI system. The interaction set 114 is data indicative of interactions performed when the AI system realized based on the AI software 113 is operated.

The graph structure data 115 and the important AI ethic checklist 116 are data generated by an extraction process of AI ethic check items of important risks by the important check item extraction unit 130. The graph structure data 115 is data obtained by graphing relationships among a stakeholder, a system component, and data represented by an interaction set. The important AI ethic checklist 116 is a list of risks determined to be important among ethical risks of the AI system realized by the AI software 113.

The analysis diagram group 117 is one or more analysis diagrams representing one or more risks determined by the related risk analysis unit 150 to be related and interactions causing the risks.

The AI development unit 120 has the function of supporting the development of an AI system. A developer generates the AI software 113 for realizing an AI system using the AI development unit 120. Furthermore, for example, when the developer develops the AI system using the AI development unit 120, the developer generates the interaction set 114 indicative of interactions performed when the AI system is operated.

The important check item extraction unit 130 extracts important AI ethic check items from AI ethic check items of ethical risks of the AI system realized by the AI software 113, and generates the important AI ethic checklist 116. The important check item extraction unit 130 includes a graph generation section 131, a feature extraction section 132, and a check item extraction section 133.

The graph generation section 131 generates the graph structure data 115 based on the interaction set 114. The feature extraction section 132 sets the priority of an interaction according to the important interaction extraction rule on the basis of the graph structure data 115. Furthermore, the feature extraction section 132 extracts, for example, a predetermined number of interactions in descending order of priority as important interactions. The check item extraction section 133 extracts AI ethic check items of ethical risks according to features of the extracted interactions on the basis of the AI ethic checklist 112.

The risk setting unit 140 accepts from an analyst an input of specific risks for AI ethic check items indicated in the important AI ethic checklist 116. The risk setting unit 140 sets the inputted risks in the important AI ethic checklist 116.

The related risk analysis unit 150 analyzes the relationship between risks indicated in the important AI ethic checklist 116. Furthermore, the related risk analysis unit 150 generates an analysis diagram representing related risks and interactions that cause the risks. If a plurality of sets of risks related to each other are generated, then the related risk analysis unit 150 generates a plurality of analysis diagrams.

The related risk analysis unit 150 includes a path extraction section 151 and a risk extraction section 152. The path extraction section 151 extracts a path on a graph structure specified by the analyst from the graph structure data 115. The extracted path is represented by a set of interactions included in the path. The risk extraction section 152 extracts risks regarding the interactions included in the extracted path from the important AI ethic checklist 116. Furthermore, the risk extraction section 152 generates an analysis diagram on the basis of the extracted risks and interactions.

The analysis diagram display unit 160 displays an analysis diagram included in the analysis diagram group 117 on the monitor 21 in response to instructions from the analyst.

Each function illustrated in FIG. 4 is realized by, for example, causing the processor 101 to execute a program module corresponding to the element.

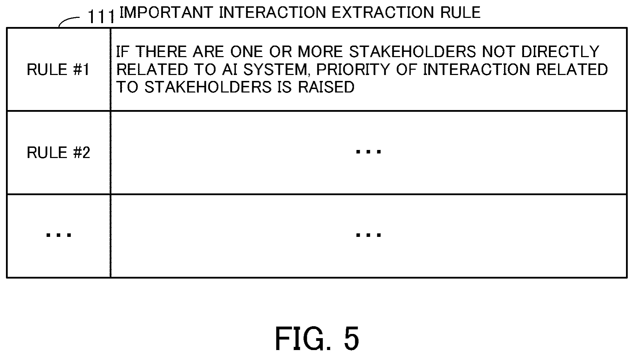

FIG. 5 illustrates an example of an important interaction extraction rule. In the important interaction extraction rule 111, the features of a graph structure in which an ethical risk is likely to occur and items of an AI ethic checklist to be suppressed are registered in advance as rules. For example, the rule that "if there are one or more stakeholders not directly related to the AI system, the priority of an interaction related to the stakeholders is raised" is registered. A stakeholder not directly related to the AI system is, for example, a stakeholder who provides data to be provided to the AI system to the AI system via another stakeholder.

This rule is a rule for grasping an influence on an indirect stakeholder that tends to be overlooked in the design and development of the AI system.

The important check item extraction unit 130 may extract an important interaction from among interactions performed in the operation of the developed AI system on the basis of the important interaction extraction rule 111.

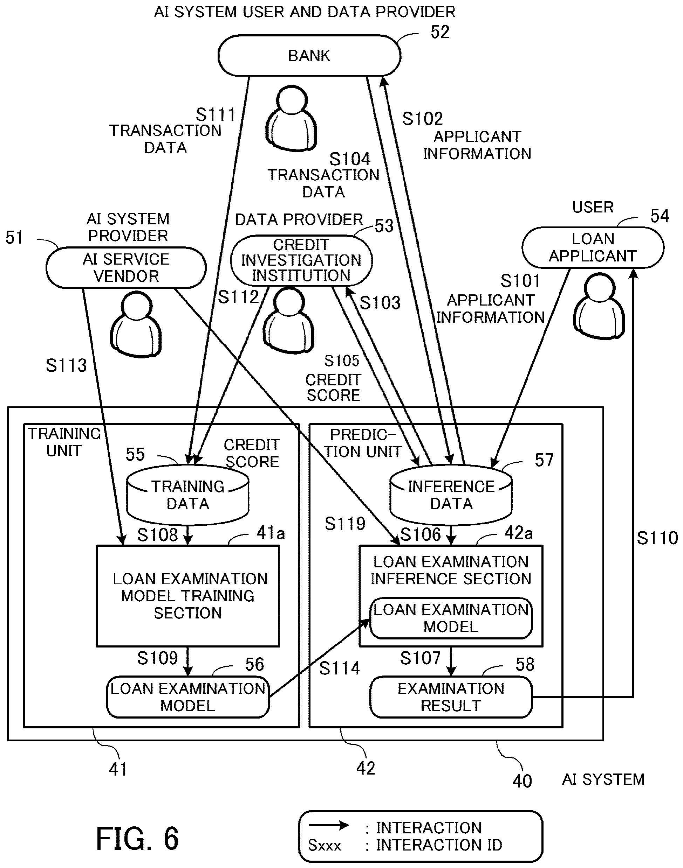

FIG. 6 illustrates an example of interactions performed at the time of the operation of an AI system. An AI system 40 illustrated in FIG. 6 is an AI system for performing a loan examination. Arrows in FIG. 6 indicate interactions. Both ends (start point and end point) of an interaction are elements each corresponding to one of a stakeholder, data, and a system component.

Stakeholders in the AI system 40 are an AI service vendor 51, a bank 52, a credit investigation institution 53, and a loan applicant 54. The AI service vendor 51 is classified as a system provider as the kind of stakeholder. The bank 52 is classified as both an AI system user and a data provider as the kind of stakeholder. The credit investigation institution 53 is classified as a data provider as the kind of stakeholder. The loan applicant 54 is classified as a user as the kind of stakeholder.

Components in the AI system 40 are a loan examination model training section 41a in a training unit 41 and a loan examination inference section 42a in a prediction unit 42. Data received from a stakeholder in the AI system 40 may be training data 55 or inference data 57. Furthermore, there is a loan examination model 56 as data transferred between the components of the AI system 40. In addition, data passed from a component of the AI system 40 to a stakeholder is, for example, an examination result 58.

The loan examination model training section 41a of the training unit 41 performs training of a loan examination model 56 by machine learning using the training data 55. The training data 55 is generated on the basis of, for example, a credit score income from the credit investigation institution 53 and transaction data acquired from the bank 52.

The loan examination inference section 42a of the prediction unit 42 outputs the examination result 58 by performing inference on the inference data 57 using the trained loan examination model 56. The inference data 57 is generated on the basis of, for example, the credit score acquired from the credit investigation institution 53, the transaction data acquired from the bank 52, and applicant information acquired from the loan applicant 54.

In FIG. 6, "Sxxx" next to an arrow indicative of an interaction indicates an interaction ID. The interaction ID of the interaction in which the applicant information is provided from the loan applicant 54 to the inference data 57 is S101. The interaction ID of the interaction in which the bank 52 receives the applicant information from the inference data 57 is S102. The interaction ID in which the credit investigation institution 53 receives the applicant information from the inference data 57 is S103.

The interaction ID of the interaction in which the bank 52 provides the transaction data to the inference data 57 is S104. The interaction ID of the interaction in which the credit investigation institution 53 provides the credit score to the inference data 57 is S105. The interaction ID of the interaction in which inference data is provided from the inference data 57 to the loan examination inference section 42a is S106. The interaction ID of the interaction ID in which output data of the loan examination model is provided from the loan examination inference section 42a to the examination result 58 is S107.

The interaction ID of the interaction in which input data for training and teacher data are provided from the training data 55 to the loan examination model training section 41a is S108. The interaction ID of the interaction in which data indicative of a trained model (for example, the value of a weight parameter of a neural network) is provided from the loan examination model training section 41a to the loan examination model 56 is S109.

The interaction ID of the interaction in which the transaction data is provided from the bank to the training data 55 is S111. The interaction ID of the interaction in which the credit score is provided from the credit investigation institution 53 to the training data 55 is S112. The interaction ID of the interaction in which data, such as parameters related to training algorithm, is provided from the AI service vendor 51 to the loan examination model training section 41a is S113. The interaction ID of the interaction in which the loan examination inference section 42a receives the loan examination model 56 is S114. The interaction ID of the interaction in which data, such as parameters related to inference algorithm, is provided from the AI service vendor 51 to the loan examination inference section 42a is S119.

Each stakeholder illustrated in FIG. 6 provides data to the AI system 40 or uses data of the AI system by the use of a computer such as a terminal or a server. Furthermore, each stakeholder illustrated in FIG. 6 is directly related to the AI system. However, there may be a stakeholder who is not directly related to the AI system and who is related to the AI system, for example, via another stakeholder.

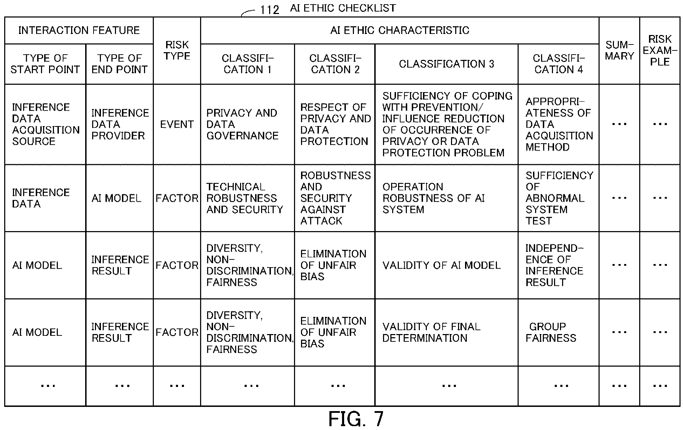

FIG. 7 illustrates an example of an AI ethic checklist. A record for each AI ethic check item is registered in the AI ethic checklist 112. Each record includes fields for interaction feature, risk type, AI ethic characteristic, summary, risk example, and the like.

In the interaction feature field, an interaction feature in which a risk occurs is set. For example, an interaction feature is indicated by a combination of the type of start point and the type of end point. The type of stakeholder, the type of system component, or the type of data is set as the type of start point and the type of end point.

In the risk type field, the type of risk which occurs in an interaction having a corresponding feature is set. The types of risk include, for example, an event and a factor. The event indicates that an event to be a risk is revealed by the interaction having the corresponding feature. The factor indicates that the interaction having the corresponding feature may be a risk occurrence factor.

In the AI ethic characteristic field, an ethical concept that may be a risk is indicated. AI ethic characteristics are classified from a plurality of viewpoints. For example, "classification 1" is classified into "privacy and data governance", "technical robustness and security", "diversity, non-discrimination, and fairness", and the like. "Classification 2" is classified into "respect of privacy and data protection", "robustness and security against attack", "elimination of unfair bias", and the like. "Classification 3" is classified into "sufficiency of coping with prevention/influence reduction of occurrence of privacy or data protection problem", "operation robustness of AI system", "validity of AI model", "validity of final determination", and the like. "Classification 4" is classified into "appropriateness of data acquisition method", "sufficiency of abnormal system test", "independence of inference result", "group fairness", and the like.

In the summary field, a summary of a risk that occurs in an interaction having a corresponding feature is set. For example, in the summary field of the first AI ethic check item of the AI ethic checklist 112, "If data acquired from another person/company is used, the data is appropriately acquired. For example, an appropriate procedure is performed, and permission is obtained from a person concerned in advance" is set. In the summary field of the second AI ethic check item, "to confirm the operation of the AI system if the AI system is used in an unexpected situation or environment or if inference data used for prediction is inputted as a value out of the range defined in the software specification" is set. In the summary field of the third AI ethic check item, "correct/incorrect answer ratio of inference results as output from the AI model is consistent between protection groups" is set. In the summary field of the fourth AI ethic check item, "difference in inference result by the AI between groups by the "protection attribute" is within an allowable range" is set.

In the risk example field, an example of a specific risk which occurs in an interaction having a corresponding feature is set. For example, as a risk example of the first AI ethic check item of the AI ethic checklist 112, "permission is not obtained in advance for an image in which a person may appear" is set. Furthermore, as a risk example of the second AI ethic check item, "operation of the AI model in a case where a value out of the range defined in the specification is inputted to inference data is not confirmed" is set. As a risk example of the third AI ethic check item, "inference result of an evaluation model of a job seeker may be disadvantageous to the disabled in a video interview adoption determination AI" is set. As a risk example of the fourth AI ethic check item, "in the loan examination AI, an AI model makes it harder for a woman or a black person to pass the examination" is set.

If the feature of an interaction determined to be important on the basis of the important interaction extraction rule 111 matches the feature of the interaction in any AI ethic check item of the AI ethic checklist 112, then the corresponding AI ethic check item is extracted.

Interactions which occur at the time of the operation of the AI system 40 are indicated in the interaction set 114.

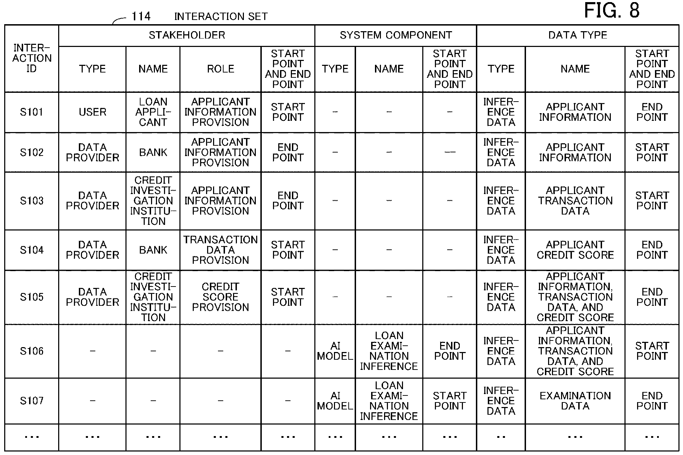

FIG. 8 illustrates an example of an interaction set. A record for each interaction is registered in the interaction set 114. Each record includes fields for interaction ID, stakeholder, system component, and data type.

In the interaction ID field, an identifier (interaction ID) of a corresponding interaction is set.

In the stakeholder field, information regarding a stakeholder in case of an interaction related to the stakeholder is set. Information regarding a stakeholder includes a type, a name, a role, and a start point and an end point. The type is the attribute of the stakeholder. Examples of the type of stakeholder include a user, an AI system provider, and a data provider. The name is the general name of the stakeholder. Examples of the name of the stakeholder include a loan applicant, a bank, and a credit investigation institution. The role is information indicative of the role of the stakeholder in an interaction. Example of the role of the stakeholder includes applicant information provision, applicant information reception, transaction data provision, and credit score provision. The start point and the end point are information indicative of whether the stakeholder corresponds to a start point (side that provides data in an interaction) or an end point (side that receives data in an interaction) of an interaction.

In the system component field, information regarding a system component in case of an interaction corresponding to a process of the system component is set. Information regarding a system component includes a type, a name, and a start point and an end point. The type is the attribute of the system component. Examples of the type of the system component include an AI model. The name is the general name of the system component. Examples of the name of the system component include loan examination inference. The start point and the end point are information indicative of whether the system component corresponds to a start point or an end point of an interaction.

In the data type field, information regarding the type of data in case of an interaction corresponding to processing of the data is set. Data type information includes a type, a name, and a start point and an end point. The type is the type of data to be worked on or processed. Example of the type of data includes inference data. The name is the name of data for which an interaction is performed. Example of the name of data includes applicant information, applicant transaction data, an applicant credit score, and examination data. If a plurality of pieces of data having different names are included as data for which an interaction is performed, then the names of these pieces of data are set as names in the data type field. The start point and the end point are information indicative of whether the type of data corresponds to a start point or an end point of an interaction.

Each record of the interaction set 114 may additionally include a field for setting information regarding stakeholders (for example, the number of the stakeholders) that are not directly involved in a corresponding interaction but are indirectly involved in the interaction.

The important check item extraction unit 130 may extract important check items on an ethical risk regarding the developed AI system 40 on the basis of the interaction set 114 corresponding to the developed AI system 40.

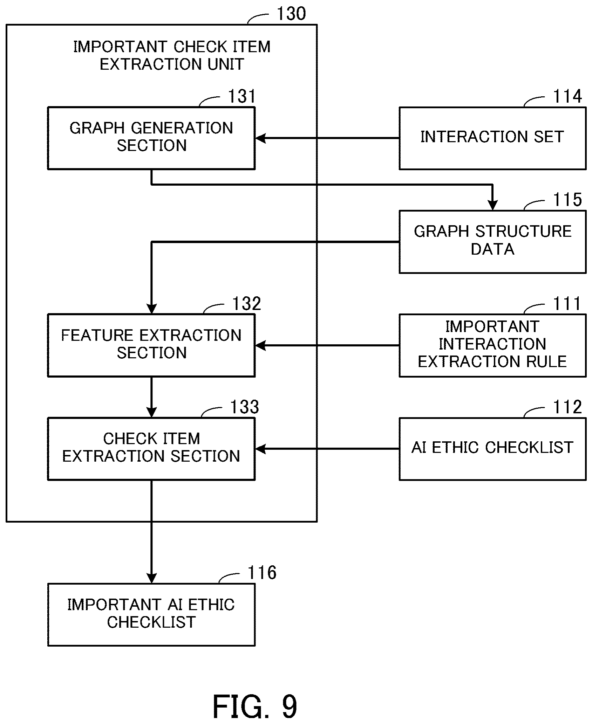

FIG. 9 illustrates an example of an important check item extraction process. For example, the graph generation section 131 generates the graph structure data 115 of the developed AI system 40 on the basis of the interaction set 114. The feature extraction section 132 calculates the priority of each interaction indicated in the graph structure data 115 on the basis of the important interaction extraction rule 111, and extracts a predetermined number of interactions in descending order of priority. The check item extraction section 133 refers to the AI ethic checklist 112 and extracts an AI ethic check item corresponding to the feature of the extracted interaction in association with the interaction. Furthermore, the check item extraction section 133 outputs the important AI ethic checklist 116 including the extracted AI ethic check item.

The important AI ethic checklist 116 is generated in this way as a result of the important check item extraction process. In addition, in the course of the important check item extraction process, the graph structure data 115 is generated. The generated graph structure data 115 and the important AI ethic checklist 116 are used for analysis of a related risk by the related risk analysis unit 150.

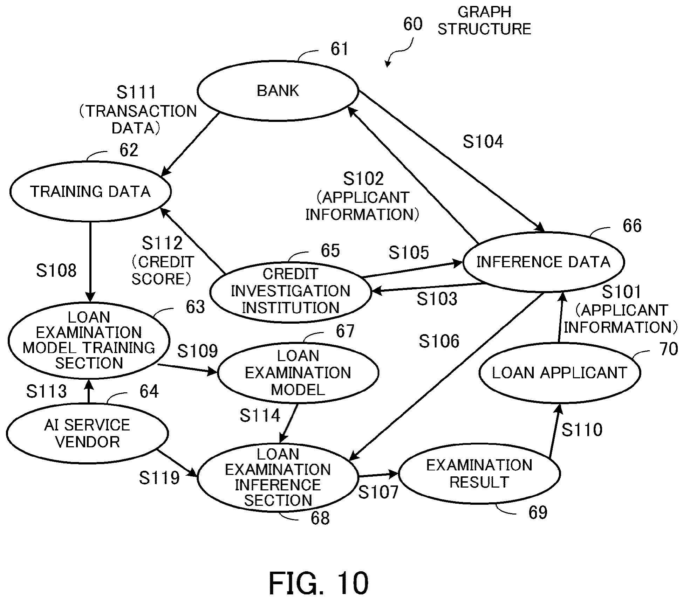

FIG. 10 illustrates an example of a graph structure of an interaction indicated by graph structure data. In an interaction graph structure 60, stakeholders, system components, and data as a start point or an end point of an interaction are represented by nodes 61 to 70. Furthermore, a node corresponding to an element as the start point of the interaction and a node corresponding to an element as the end point of the interaction are connected by an edge (arrow) which represents the interaction. The edge points a direction from the start point to the end point. The interaction ID of the interaction is indicated next to the edge corresponding to the interaction.

Before the important AI ethic checklist 116 is used for analysis of a related risk, the risk setting unit 140 sets a risk determined by the analyst.

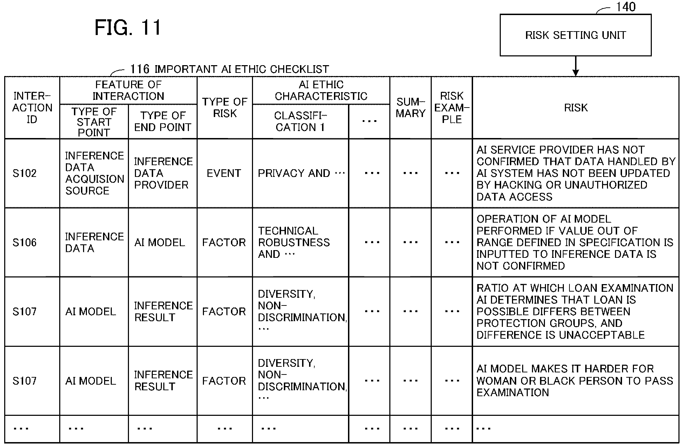

FIG. 11 illustrates an example of an important AI ethic checklist. Records corresponding to AI ethic check items determined to be important are registered in the important AI ethic checklist 116. Each record includes fields for interaction ID, interaction feature, risk type, AI ethic characteristic, summary, risk example, and risk.

In the interaction ID field, the interaction ID of an interaction determined to be important on the basis of the important interaction extraction rule 111 among interactions indicated in the graph structure data 115 is set. Information on AI ethic check items set in the AI ethic checklist 112 in association with an interaction feature indicated by an interaction ID is set in the interaction feature, risk type, AI ethic characteristic, summary, and risk example fields. In the risk field, a specific risk which occurs for an AI ethic check item of an interaction indicated by an interaction ID is set.

For example, the analyst uses the risk setting unit 140 to input a specific risk that may occur in the AI system 40 for an AI ethic check item determined to be important. The risk setting unit 140 sets a risk in each record of the important AI ethic checklist 116 on the basis of an input from the analyst. In the example of FIG. 11, the following risks are set in the risk field of each AI ethic check item of the important AI ethic checklist 116.

In the risk field of the first AI ethic check item, "the AI service provider has not confirmed that data handled by the AI system has not been updated by hacking or unauthorized data access" is set. In the risk field of the second AI ethic check item, "the operation of the AI model performed if a value out of the range defined in the specification is inputted to the inference data is not confirmed" is set. In the risk field of the third AI ethic check item, "the ratio at which the loan examination AI determines that the loan is possible differs between the protection groups, and the difference is unacceptable" is set. In the risk field of the fourth AI ethic check item, "the AI model makes it harder for a woman or a black person to pass the examination" is set.

The computer 100 may generate, on the basis of the important AI ethic checklist 116, an analysis diagram indicative of AI ethic check items that need consideration of countermeasures against risks, and display the generated analysis diagram. However, the number of AI ethic check items included in the important AI ethic checklist 116 may be about several tens, and relationships among the AI ethic check items are not clear. Furthermore, since the important AI ethic checklist 116 indicates AI ethic check items in which ethical viewpoints are detailed, items detailed from the same viewpoint tend to have similar contents.

Therefore, the analysis diagram including all the AI ethic check items without considering the association between the risks indicated in the AI ethic check items included in the important AI ethic checklist 116 only indicates individual risks. If the analysis diagram including all such AI ethic check items is displayed, then the analyst who examines countermeasures against the risks on the basis of the analysis diagram including all the risks to be examined will examine similar risks many times. This imposes a heavy temporal and psychological burden.

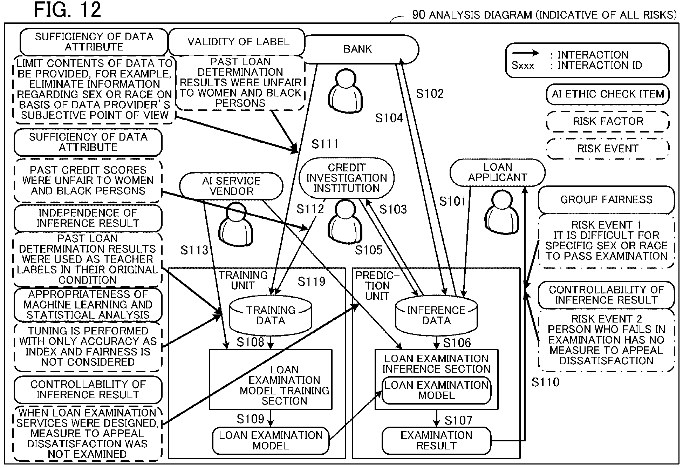

FIG. 12 illustrates an example of an analysis diagram including all risks. In an analysis diagram 90, each important interaction in the AI system 40 is associated with an AI ethic check item related to it. Furthermore, each AI ethic check item indicates a specific risk which occurs in the AI system 40 in relation to it. In the analysis diagram 90, the risks are displayed in different display modes by classifications. A risk the classification of which is a factor is surrounded by a broken line frame. A risk the classification of which is an event is surrounded by a dotdash line frame.

In the analysis diagram 90, the AI ethic check items "sufficiency of data attribute" and "validity of label" are associated with the interaction of the interaction ID "S111". The AI ethic check item "sufficiency of data attribute" is associated with the interaction of the interaction ID "S112". The AI ethic check items "independence of inference result" and "appropriateness of machine learning and statistical analysis" are associated with the interaction of the interaction ID "S113". The AI ethic check item "controllability of inference result" is associated with the interaction of the interaction ID "S119". The AI ethic check items "group fairness" and "controllability of inference result" are associated with the interaction of the interaction ID "S110".

Although the analysis diagram 90 includes eight AI ethic check items, the analysis diagram 90 includes at least several tens of AI ethic check items in many cases. Therefore, if the analysis diagram 90 including all the AI ethic check items to be examined is displayed as it is, then it is difficult for the analyst to grasp relationships among the risks.

For example, the AI ethic check item "validity of label" associated with the interaction ID "S111" and the AI ethics check item "sufficiency of data attribute" associated with the interaction ID "S112" are similar in content. In the analysis diagram 90 including all the AI ethic check items to be examined, even if there are a plurality of AI ethic check items having similar contents, there is a good possibility that the analyst overlooks the plurality of AI ethic check items having such similarity. Therefore, the analyst individually examines the plurality of AI ethic check items having similar contents. This leads to an increase in workload.

Furthermore, in the analysis diagram 90, the risks are distinguished into risk factors and risk events. However, relationships between risk factors and factors of risk events are not grasped from the analysis diagram 90. Therefore, in the analysis diagram 90, it is difficult for the analyst to collectively examine a risk event and a factor related to the event, and examination work takes time.

Although the analyst may manually group highly related risks, this grouping work depends on the skill of the analyst. Therefore, in the manual grouping by the analyst, the accuracy of the grouping may be insufficient, and it may be that the effect of shortening work time is not obtained.

Therefore, the related risk analysis unit 150 groups risks on the basis of the graph structure data 115 and the important AI ethic checklist 116. For example, the related risk analysis unit 150 performs grouping for each path which follows an interaction relationship in a graph structure. A path is a set of interactions corresponding to edges each of which is reachable from a start point node to an end point node according to its direction on the graph structure 60. A path to be generated is designated by the analyst as path information. In the path information, a plurality of passing nodes may be designated as a constraint condition regarding the path.

In addition, the related risk analysis unit 150 may perform grouping from the ethical viewpoint of a risk.

For example, the related risk analysis unit 150 receives designation of a path on the graph structure from the analyst. If there are risks corresponding to interactions on the designated path, then the related risk analysis unit 150 groups these risks into the same group. In addition, the related risk analysis unit 150 performs finer grouping of the risks in the group generated on the basis of the designated path according to commonality from an ethical viewpoint. Furthermore, the related risk analysis unit 150 generates an analysis diagram for each risk group generated by the grouping performed on the basis of the designated path and the commonality of the ethical viewpoint.

The analysis diagram display unit 160 selects an analysis diagram corresponding to the ethical viewpoint designated by the analyst from the analysis diagram group 117 including analysis diagrams for each group, and displays the analysis diagram on the monitor 21. Risks caused by the operation of the AI system 40 are classified and visualized in this way according to the designation from the analyst.

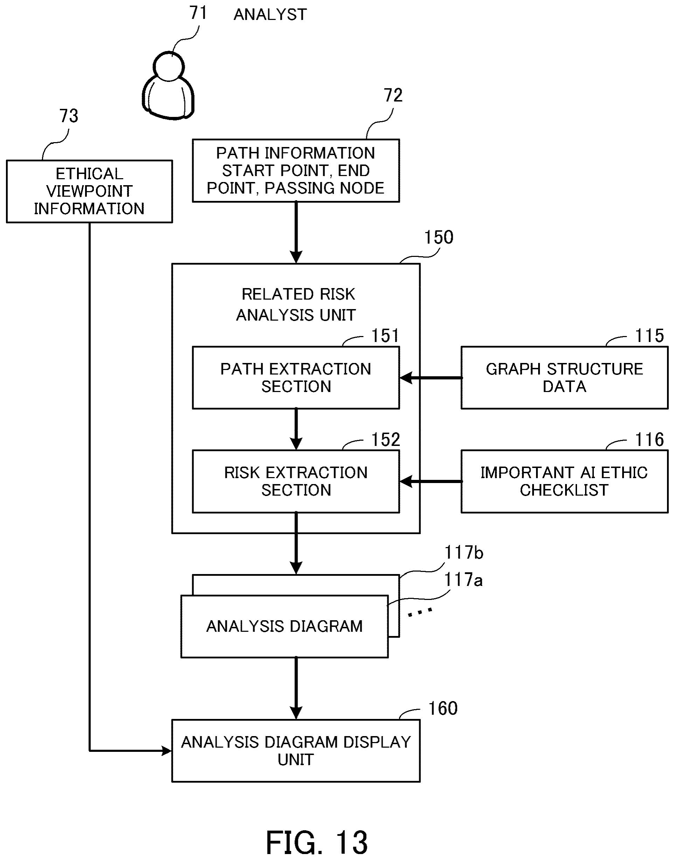

FIG. 13 illustrates an example of a related risk visualization process. For example, the related risk analysis unit 150 receives an input of path information 72 from an analyst 71. The path information 72 includes, for example, information indicative of a start point node and an end point node of a path including one or more interactions in a graph structure. Furthermore, the path information 72 may include a passing node.

The path extraction section 151 of the related risk analysis unit 150 extracts a path designated by the path information 72 on the basis of the graph structure data 115. The risk extraction section 152 extracts AI ethic check items corresponding to interactions included in the extracted path from the important AI ethic checklist 116. Furthermore, the risk extraction section 152 generates analysis diagrams 117a, 117b, ... for each AI ethic characteristic in a predetermined classification (classification 1, classification 2, ... of the AI ethic checklist 112). The risk extraction section 152 stores the generated analysis diagrams 117a, 117b, ... in the storage unit 110 as the analysis diagram group 117.

The analysis diagram display unit 160 receives an input of ethical viewpoint information 73 from the analyst 71. The ethical viewpoint information 73 includes, for example, information which designates an AI ethic characteristic in the predetermined classification.

The analysis diagram display unit 160 acquires an analysis diagram corresponding to the AI ethic characteristic indicated in the ethical viewpoint information 73 from among the analysis diagrams 117a, 117b, ... included in the analysis diagram group 117, and displays the acquired analysis diagram on the monitor 21.

A procedure for a related risk analysis process will now be described in detail.

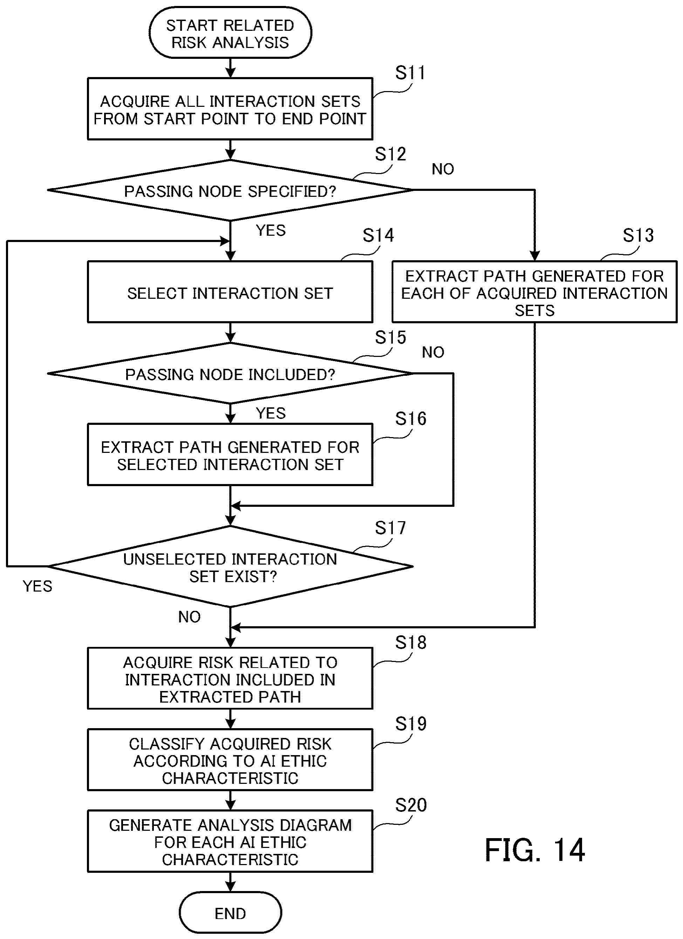

FIG. 14 is a flowchart illustrative of an example of a procedure for a related risk analysis process. Hereinafter, steps illustrated in the flowchart will be described along the step numbers.

[Step S11] On the basis of the start point and the end point indicated in the path information 72, the path extraction section 151 acquires an interaction set indicative of interactions on a path from the start point to the end point of a graph structure indicated in the graph structure data 115. If there are a plurality of paths from the start point to the end point, then a plurality of interaction sets are obtained.

The path extraction section 151 searches for a path in the direction of the arrow of an edge from the start point node on the graph structure 60 on the basis of, for example, a start point node and an end point node. By doing so, the path extraction section 151 identifies a path which meets a condition indicated in the path information 72. Furthermore, information indicative of the order of edges from a start point to an end point may be set in advance in the path extraction section 151 for each pair of a start point node and an end point node.

[Step S12] The path extraction section 151 determines whether a passing node is specified in the path information 72. If a passing node is specified in the path information 72, then the path extraction section 151 advances the process to step S14. If a passing node is not specified in the path information 72, then the path extraction section 151 advances the process to step S13.

[Step S13] The path extraction section 151 extracts, for each of the acquired interaction sets, a path generated by connecting interactions included in an interaction set. After that, the path extraction section 151 advances the process to step S18.

[Step S14] The path extraction section 151 selects one unselected interaction set from among the acquired interaction sets.

[Step S15] The path extraction section 151 determines whether a specified passing node is included in a path generated by connecting interactions included in the selected interaction set. If a passing node is included in the path, then the path extraction section 151 advances the process to step S16. If a passing node is not included in the path, then the path extraction section 151 advances the process to step S17.

[Step S16] The path extraction section 151 extracts the path generated by connecting the interactions included in the selected interaction set.

[Step S17] The path extraction section 151 determines whether there is an unselected interaction set. If there is an unselected interaction set, then the path extraction section 151 advances the process to step S14. If all the extracted interaction sets have been selected, then the path extraction section 151 advances the process to step S18.

[Step S18] The risk extraction section 152 acquires from the important AI ethic checklist 116 a risk related to an interaction included in the path extracted by the path extraction section 151.

[Step S19] The risk extraction section 152 classifies the acquired risk according to an AI ethic characteristic indicated by a predetermined classification (classification 1, classification 2, ... indicated in the AI ethic checklist 112). For example, the risk extraction section 152 classifies the risk by one of the four classification criteria of the AI ethic characteristics.

[Step S20] The risk extraction section 152 generates, for each group classified by AI ethic characteristics, an analysis diagram indicative of risks included in a group.

An analysis diagram for each AI ethic characteristic is generated in this way on the basis of AI ethic check items related to a path corresponding to the path information 72 designated by the analyst 71. When the analyst 71 selects any AI ethic characteristic, an analysis diagram corresponding to the selected AI ethic characteristic is displayed.

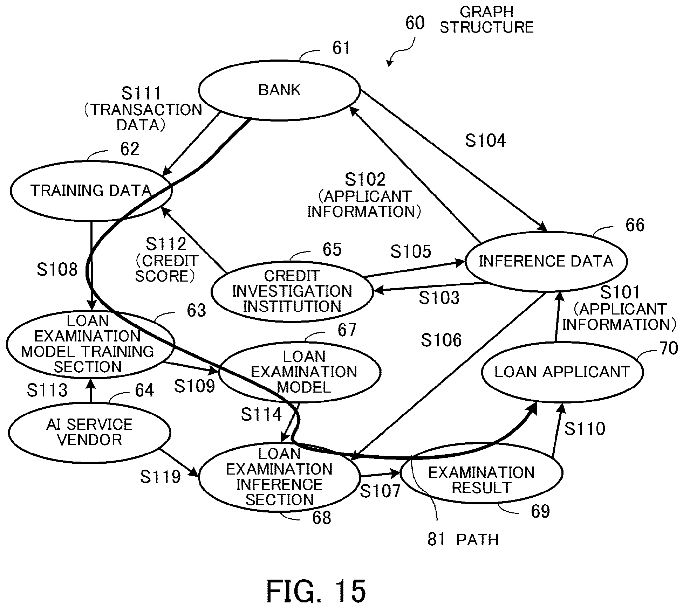

FIG. 15 illustrates a first example of a path extracted according to path information. FIG. 15 illustrates a path 81 extracted from the graph structure 60 if, in the path information 72, the stakeholder "bank" is designated as a start point and the stakeholder "loan applicant" is designated as an end point. In the example of FIG. 15, a node 62 of the data "training data" or a node 63 of the system component "loan examination model training section" is designated as a passing node.

In this case, the path 81 from a node 61 of "bank" to a node 70 of "loan applicant" is extracted. The path 81 passes through the node 62 of "training data", the node 63 of "loan examination model training section", a node 67 of "loan examination model", a node 68 of "loan examination inference section", and a node 69 of "examination result". When the path 81 is extracted, risks associated with the interactions on the path 81 are extracted and an analysis diagram corresponding to AI ethic characteristics on the extracted risks is generated.

When the analyst 71 selects AI ethic characteristics, an analysis diagram corresponding to the selected AI ethic characteristics is displayed.

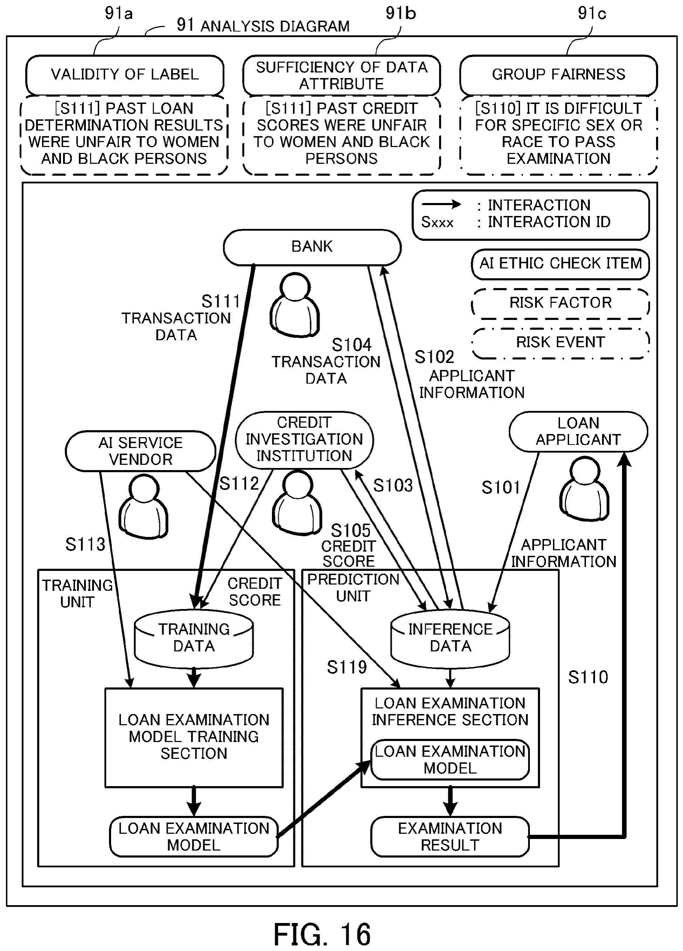

FIG. 16 illustrates a first example of a displayed analysis diagram. FIG. 16 illustrates an analysis diagram 91 displayed if "fairness viewpoint" is selected as an AI ethic characteristic. In the analysis diagram 91, interactions included in the path 81 extracted according to the path information 72 are indicated by thick edges. Furthermore, of AI ethic check items corresponding to the interactions included in the path 81, AI ethic check items 91a to 91c from the viewpoint of fairness are displayed as risks related to one another. In each of the AI ethic check items 91a to 91c, the content of a risk and the interaction ID of a corresponding interaction are indicated.

By referring to the analysis diagram 91, for example, the analyst 71 generates the loan examination model 56 on the basis of transaction data provided from the bank 52 and grasps all risks from the viewpoint of fairness which occur in the process of an examination using the loan examination model 56. Furthermore, the analyst 71 is able to easily determine a risk factor related to a risk event on the basis of the analysis diagram 91. As a result, the analyst 71 is able to easily plan a unified and appropriate countermeasure against these risks.

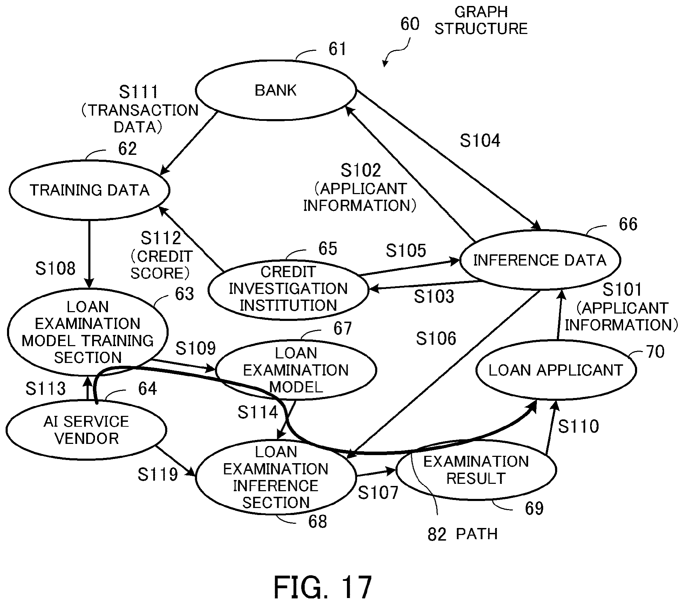

FIG. 17 illustrates a second example of a path extracted according to path information. FIG. 17 illustrates a path 82 extracted from the graph structure 60 if, in the path information 72, the stakeholder "AI service vendor" is designated as a start point and the stakeholder "loan applicant" is designated as an end point. In the example of FIG. 17, the node 63 of the system component "loan examination model training section" is designated as a passing node.

In this case, the path 82 from a node 64 of the "AI service vendor" to the node 70 of the "loan applicant" is extracted. The path 82 passes through the node 63 of the "loan examination model training section", the node 67 of the "loan examination model", the node 68 of the "loan examination inference section", and the node 69 of the "examination result". When the path 82 is extracted, risks associated with the interactions on the path 82 are extracted and an analysis diagram corresponding to AI ethic characteristics on the extracted risks is generated.

When the analyst 71 selects AI ethic characteristics, an analysis diagram corresponding to the selected AI ethic characteristics is displayed.

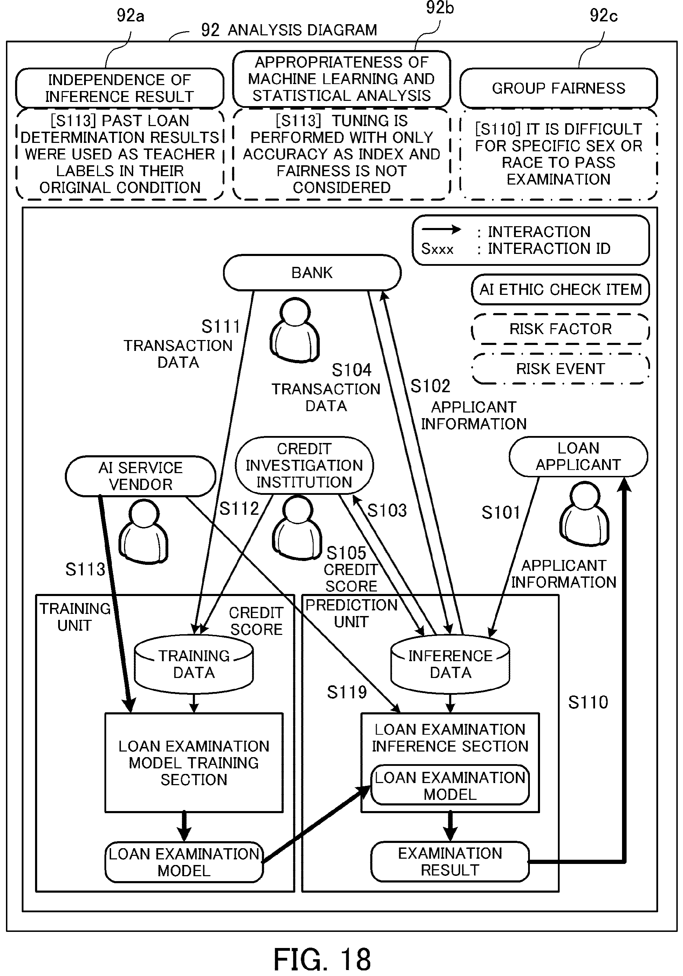

FIG. 18 illustrates a second example of a displayed analysis diagram. FIG. 18 illustrates an analysis diagram 92 displayed if "fairness viewpoint" is selected as an AI ethic characteristic. In the analysis diagram 92, AI ethic check items 92a to 92c from the viewpoint of fairness, of AI ethic check items corresponding to the interactions included in the path 82 extracted according to the path information 72, are displayed as risks related to one another.

By referring to the analysis diagram 92, for example, the analyst 71 generates the loan examination model 56 on the basis of various parameters provided from the AI service vendor 51, and grasps all risks from the viewpoint of fairness which occur in the process of an examination using the loan examination model 56. As a result, the analyst 71 is able to easily plan a unified and appropriate countermeasure against these risks.

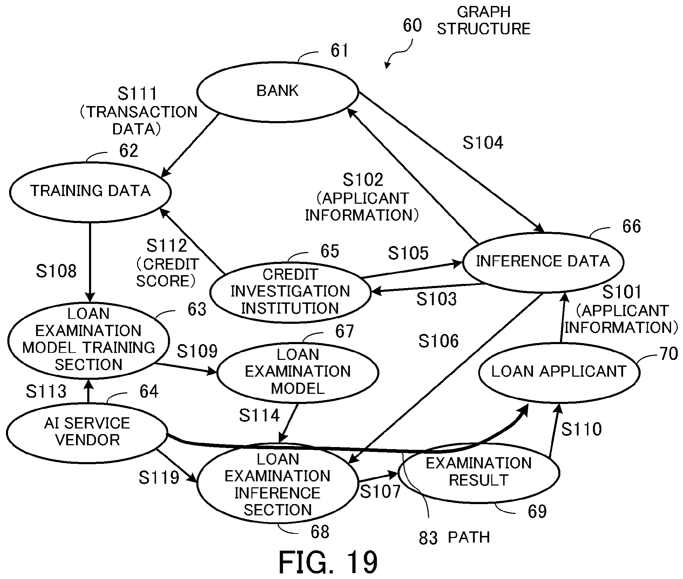

FIG. 19 illustrates a third example of a path extracted according to path information. FIG. 19 illustrates a path 83 extracted from the graph structure 60 if, in the path information 72, the stakeholder "AI service vendor" is designated as a start point and the stakeholder "loan applicant" is designated as an end point. In the example of FIG. 19, the node 68 of "loan examination inference section" and the node 69 of "examination result" are designated as passing nodes.

In this case, the path 83 from the node 64 of the "AI service vendor" to the node 70 of the "loan applicant" via the node 68 of the "loan examination inference section" and the node 69 of the "examination result" is extracted. In this case, risks associated with the interactions on the path 83 are extracted, and an analysis diagram corresponding to AI ethic characteristics on the extracted risks is generated.

Furthermore, when the analyst 71 selects AI ethic characteristics, an analysis diagram corresponding to the selected AI ethic characteristics is displayed.

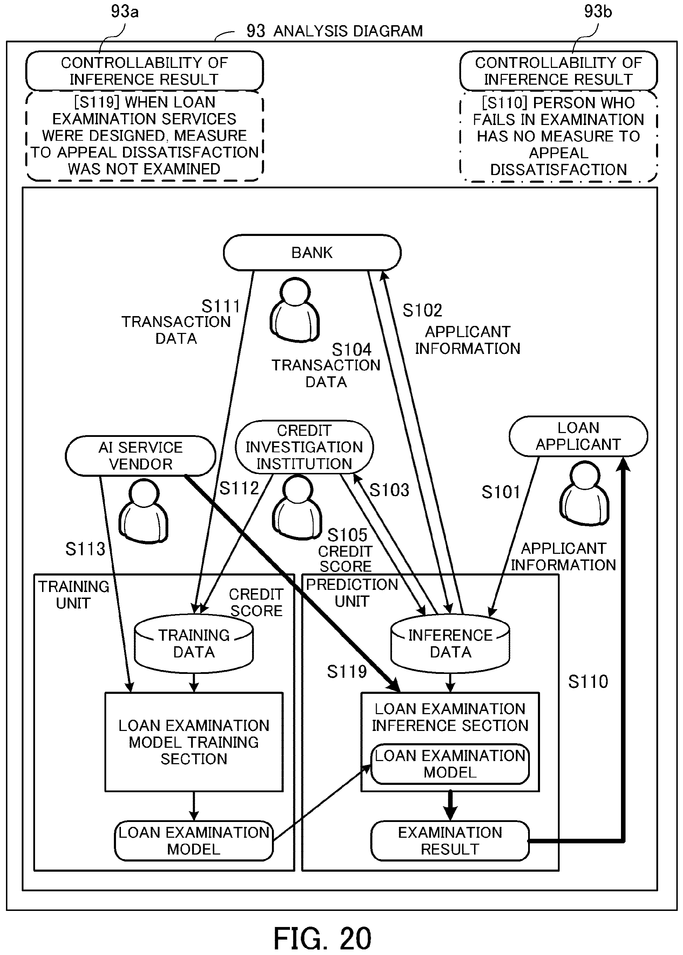

FIG. 20 illustrates a third example of a displayed analysis diagram. FIG. 20 illustrates an analysis diagram 93 displayed if "human agency and oversight" is selected as an AI ethic characteristic. In the analysis diagram 93, AI ethic check items 93a and 93b from the viewpoint of "human agency and oversight", of AI ethic check items corresponding to the interactions included in the path 83 extracted according to the path information 72, are displayed as risks related to one another.

By referring to the analysis diagram 93, for example, the analyst 71 grasp all risks from the viewpoint of fairness which occur in the process of an examination using the loan examination model 56 generated on the basis of various parameters provided from the AI service vendor 51. As a result, the analyst 71 is able to easily plan a unified and appropriate countermeasure against these risks.

As has been described in the foregoing, the computer 100 expresses a story using the AI system 40 by a path. The computer 100 displays in an easily understandable way why a risk occurs by narrowing down some stories to risks related to a specific path and presenting the risks. In addition, because only the risks related to the specific path are presented, it is easy to understand how the risks occur. Since the number of risks displayed in an analysis diagram is small, an overlook of related risks is suppressed. In addition, the computer 100 may display only risks related to a specific ethical viewpoint, and the viewpoint of displayed risks is unified. Therefore, the analyst is able to easily examine a unified countermeasure against a plurality of risks related to similar ethical viewpoints.

### [Other Embodiments]

In the second embodiment, the computer 100 selects stakeholders at both ends of a path on the basis of an input of the analyst 71 and searches for the path. However, an analysis diagram for each combination of all stakeholders may be generated without inputting the path information 72. In this case, after the analysis diagrams are generated, the analyst 71 inputs the path information 72 indicative of a combination of stakeholders to the computer 100. The computer 100 displays an analysis diagram corresponding to a path corresponding to a combination of stakeholders designated by the inputted path information.

Furthermore, the computer 100 may also determine, of all paths which connect stakeholders, a path for which risks are to be preferentially examined on the basis of the features of nodes and edges.

Features of a graph structure used for determining the priority of a path are, for example, features regarding to a node, an edge, the direction of the edge. Information, such as the type of node (stakeholder, component, or data), the number of input edges, and the number of output edges, may be used as the feature of a node. Information, such as the feature of a start point node, the feature of an end point node, the number of related risks, the sentence of a risk, and the importance of a risk, may be used as the feature of an edge.

The computer 100 may obtain the priority of a path by the use of, for example, a machine learning model. In this case, the computer 100 performs a process for generating a machine learning model for obtaining a priority of a path. For example, the computer 100 may use, as training data of the machine learning model for determining the priority of a path, data in which information, such as a height of a risk, is associated manually or by text analysis with a risk of the same path indicated in a past related risk analysis result. In addition, the computer 100 may determine priority on the basis of the number of associated risks for all paths obtained as a result of past related risk analyses and use the priority as a teacher label. Furthermore, the computer 100 trains a model for determining priority from the feature of a path. For example, if an analysis diagram for each path is generated, then the computer 100 determines the priority of a path on the basis of the trained model and displays analysis diagrams on the monitor 21 in order from an analysis diagram corresponding to the highest priority path.

Although the embodiments have been illustrated, the structure of each unit described in the embodiments may be replaced with another structure having the same function. In addition, any other components or processes may be added. Furthermore, any two or more structures (features) of the above embodiments may be combined.

### Reference Signs List

1 AI system
2a, 2b Function
3a, 3b, 3c, 3d Management target data
4a, 4b, 4c Relevant person
5 Path information
6 First path
7 First data transfer relationship
8 Analysis diagram
10 Information processing apparatus
11 Storage unit
11a Relationship information
11b Checklist
12 Processing unit

## Claims

1. An evaluation support program that causes a computer to perform a process comprising:
identifying, based on relationship information indicative of data transfer relationships between two of a function in an artificial intelligence (AI) system, management target data managed by the AI system, and a relevant person involved in an operation of the AI system, a first path indicative of a route which follows a data transfer relationship from a start point to an end point, with the start point set to one of the function, the management target data, and the relevant person and the end point set to another one of the function, the management target data, and the relevant person;
selecting a first check item related to a first data transfer relationship on a route indicated by the first path from among a plurality of check items related to any of the data transfer relationships indicated in the relationship information; and
displaying information on the first check item.

2. The evaluation support program according to claim 1, wherein:
the process further includes selecting, in response to the first check item being provided in plurality, a second check item belonging to a first group of the plurality of first check items, based on classification information indicating to which of a plurality of groups each of the plurality of check items belongs; and
the displaying of the information on the first check item includes displaying information on the second check item selected from among the plurality of first check items.

3. The evaluation support program according to claim 1 or 2, wherein the identifying of the first path includes identifying, as the first path, a route which follows the data transfer relationship from the start point to the end point via a passing target, based on path information in which at least one of the function, the management target data, or the relevant person is specified as the passing target in addition to a designation of the start point and the end point.

4. The evaluation support program according to claim 1 or 2, wherein:
each of the plurality of check items indicates a risk which occurs in a related data transfer relationship; and
the displaying of the information on the first check item includes displaying a risk corresponding to the first check item in association with a data transfer relationship related to the first check item.

5. An evaluation support method executed by a computer, the evaluation support method comprising:
identifying, based on relationship information indicative of data transfer relationships between two of a function in an artificial intelligence (AI) system, management target data managed by the AI system, and a relevant person involved in an operation of the AI system, a first path indicative of a route which follows a data transfer relationship from a start point to an end point, with the start point set to one of the function, the management target data, and the relevant person and the end point set to another one of the function, the management target data, and the relevant person;
selecting a first check item related to a first data transfer relationship on a route indicated by the first path from among a plurality of check items related to any of the data transfer relationships indicated in the relationship information; and
displaying information on the first check item.

6. An information processing apparatus comprising a processing unit which identifies, based on relationship information indicative of data transfer relationships between two of a function in an artificial intelligence (AI) system, management target data managed by the AI system, and a relevant person involved in an operation of the AI system, a first path indicative of a route which follows a data transfer relationship from a start point to an end point, with the start point set to one of the function, the management target data, and the relevant person and the end point set to another one of the function, the management target data, and the relevant person, which selects a first check item related to a first data transfer relationship on a route indicated by the first path from among a plurality of check items related to any of the data transfer relationships indicated in the relationship information, and which displays information on the first check item.

7. The information processing apparatus according to claim 6, wherein the processing unit:
selects, in response to the first check item being provided in plurality, a second check item belonging to a first group of the plurality of first check items based on classification information indicating to which of a plurality of groups each of the plurality of check items belongs; and
in displaying the information on the first check item, displays information on the second check item selected from among the plurality of first check items.

8. The information processing apparatus according to claim 6 or 7, wherein, in identifying the first path, the processing unit identifies, as the first path, a route which follows the data transfer relationship from the start point to the end point via a passing target, based on path information in which at least one of the function, the management target data, or the relevant person is specified as the passing target in addition to a designation of the start point and the end point.

9. The information processing apparatus according to claim 6 or 7, wherein:
each of the plurality of check items indicates a risk which occurs in a related data transfer relationship; and
in displaying the information on the first check item, the processing unit displays a risk corresponding to the first check item in association with a data transfer relationship related to the first check item.
